(19) Europäisches Patentamt
European Patent Office
Office européen des brevets

(11) **EP 2 559 311 B1**

(12) **EUROPEAN PATENT SPECIFICATION**

(45) Date of publication and mention of the grant of the patent:
**07.06.2017 Bulletin 2017/23**

(21) Application number: **11717815.2**

(22) Date of filing: **08.04.2011**

(51) Int Cl.:
***H04W 72/12*** (2009.01)

(86) International application number:
**PCT/US2011/031743**

(87) International publication number:
**WO 2011/130115 (20.10.2011 Gazette 2011/42)**

(54) **SIGNALING OF PRECODING GRANULARITY FOR LTE AND LTE-A**

SIGNALISIERUNG VON VORCODIERUNGSGRANULARITÄT FÜR LTE UND LTE-A

SIGNALISATION D'UNE GRANULARITÉ DE PRÉCODAGE POUR UN SYSTÈME D'ÉVOLUTION À LONG TERME (LTE) OU UN SYSTÈME AVANCÉ D'ÉVOLUTION À LONG TERME (LTE-A)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2010 US 325178 P**

(43) Date of publication of application:
**20.02.2013 Bulletin 2013/08**

(73) Proprietor: **BlackBerry Limited**
**Waterloo, ON N2K 0A7 (CA)**

(72) Inventors:
• **CAI, Zhijun**
**Irving**
**Texas 75039 (US)**
• **EARNSHAW, Andrew Mark**
**Kanata**
**Ontario K2K 3K1 (CA)**
• **FONG, Mo-Han**
**Kanata**
**Ontario K2K 3K1 (CA)**
• **HEO, Youn Hyoung**
**Kitchener**
**Ontario N2M 5C8 (CA)**
• **YU, Dongsheng**
**Kanata**
**Ontario K2K 3K1 (CA)**
• **XU, Hua**
**Kanata**
**Ontario K2K 3K1 (CA)**

(74) Representative: **Noble, Nicholas et al**
**Kilburn & Strode LLP**
**20 Red Lion Street**
**London WC1R 4PJ (GB)**

(56) References cited:
**US-A1- 2009 323 773**

• **CATT: "Discussion on precoding granularity for downlink MIMO", 3GPP DRAFT; R1-093541, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090819, 19 August 2009 (2009-08-19), XP050351800, [retrieved on 2009-08-19]**
• **SAMSUNG: "Discussion on RB Bundling for DM-RS", 3GPP DRAFT; R1-102187 RB_BOUNDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419467, [retrieved on 2010-04-06]**
• **"LTE; Evolved Universal Terrestrial Radio Access (E-UTRA); Physical layer procedures (3GPP TS 36.213 version 9.1.0 Release 9)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP RAN 1, no. V9.1.0, 1 April 2010 (2010-04-01), XP014046897,**

**Description**

BACKGROUND

As used herein, the terms "user equipment" and "UE" might in some cases refer to mobile devices such as mobile telephones, personal digital assistants, handheld or laptop computers, and similar devices that have telecommunications capabilities. Such a UE might consist of a UE and its associated removable memory module, such as but not limited to a Universal Integrated Circuit Card (UICC) that includes a Subscriber Identity Module (SIM) application, a Universal Subscriber Identity Module (USIM) application, or a Removable User Identity Module (R-UIM) application. Alternatively, such a UE might consist of the device itself without such a module. In other cases, the term "UE" might refer to devices that have similar capabilities but that are not transportable, such as desktop computers, set-top boxes, or network appliances. The term "UE" can also refer to any hardware or software component that can terminate a communication session for a user. Also, the terms "user equipment," "UE," "user agent," "UA," "user device" and "user node" might be used synonymously herein.

As telecommunications technology has evolved, more advanced network access equipment has been introduced that can provide services that were not possible previously. This network access equipment might include systems and devices that are improvements of the equivalent equipment in a traditional wireless telecommunications system. Such advanced or next generation equipment may be included in evolving wireless communications standards, such as long-term evolution (LTE). For example, an LTE system might include an Evolved Universal Terrestrial Radio Access Network (E-UTRAN) node B (eNB), a wireless access point, or a similar component rather than a traditional base station. As used herein, the term "access node" will refer to any component of the wireless network, such as a traditional base station, a wireless access point, or an LTE eNB, that creates a geographical area of reception and transmission coverage allowing a UE or a relay node to access other components in a telecommunications system. An access node may comprise a plurality of hardware and software. LTE may be said to correspond to Third Generation Partnership Project (3GPP) Release 8 (Rel-8 or R8) and Release 9 (Rel-9 or R9) while LTE Advanced (LTE-A) may be said to correspond to Release 10 (Rel-10 or R10) and possibly to releases beyond Release 10.

3GPP TSG RAN WG1 Meeting #58 R1-093541 provides comments upon discussions held in relation to precoding granularity for downlink MIMO. In particular, D1 recites that "It is claimed that interpolation of channel estimate across RBs can bring some performance gains in terms of channel estimation especially true for MMSE based estimator. To effectively reap the benefits of multi-RB channel estimation, UE should be aware of the precoding granularity applied in BS, and then channel estimation with corresponding granularity can be accomplished. One of the following three schemes can be considered to indicate the precoding granularity to receiver.

- Scheme 1: Indication by high layer signaling
When transmitter is scheduled in a transmission mode with precoding by RRC signaling, precoding granularity can also be informed by RRC signaling. The precoding granularity information (PGI) can be encoded jointly with transmission mode or encoded individually. If encoded jointly, precoding granularity can only be changed along with the transmission mode. This scheme can inform precoding granularity flexibly when transmission mode is changed.
- Scheme 2: Indication by control signaling
Precoding granularity can also be indicated by control signaling in PDCCH. Some bits can be contained in corresponding DCI formats to indicate the precoding granularity. As the number of possible precoding granularity would not be too large, 2-3 indication bits should be enough. Even if precoding granularity changes frequently, UE can estimate the channel information well.
- Scheme 3: Prior agreement between BS and UE
To reduce the signaling overhead, UE and BS can make an agreement about precoding granularity before transmission. When an UE is scheduled in precoding mode by high layers, the UE is aware of the precoding granularity according to the agreement. The agreement can be a fixed value, or related to system parameter, such as system bandwidth".

3GPP TSG RAN WG1 Meeting #60bis R1-102187 provides comments upon discussions held in relation to RB Bundling for DM-RS. In particular, R1-102187 "explore[s] the potential benefits of PRB-bundling/precoding granularity and discuss[es] the possible specification support to enable PRB-bundling/precoding granularity indication for LTE-A systems".

SUMMARY

The invention is set out in the claims.

BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 is a diagram of an example of common reference signal (RS) and dedicated reference signal allocations for Release 8, Release 9, and beyond.
Figure 2 is a diagram of common reference signal and dedicated reference signal transmission chains.
Figure 3 is a diagram of resource blocks using the same precoding or beamforming (BF) vector.

Figure 4 is a diagram of a two-tier high-layer signal for precoding granularity according to an embodiment of the disclosure.

Figure 5 is a diagram of open-loop and closed-loop precoding and its linkage to precoding granularity according to an embodiment of the disclosure.

Figure 6 is a diagram of a precoding granularity configuration without an explicit configuration of open-loop precoding according to an embodiment of the disclosure.

Figure 7 is an illustration for a first precoding granularity alternative according to an embodiment of the disclosure.

Figure 8 is an illustration for a second precoding granularity alternative according to an embodiment of the disclosure.

Figure 9 is an illustration for a third precoding granularity alternative according to an embodiment of the disclosure.

Figure 10 is an illustration of different mappings of precoding units according to an embodiment of the disclosure.

Figure 11 is an illustration of precoding granularity based on resource block groups according to an embodiment of the disclosure.

Figure 12 contains tables related to embodiments of the disclosure.

Figure 13 illustrates a processor and related components suitable for implementing the several embodiments of the present disclosure.

DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Embodiments of the present disclosure provide a number ways of signaling precoding granularity for LTE and LTE-A downlink transmissions when dedicated reference signaling is used for data demodulation. The information on precoding granularity allows a UE to conduct accurate channel estimation and improve its overall performance. The embodiments cover a wide range of ways for signaling of precoding granularity including dynamic signaling, semi-static signaling, physical layer signaling, high layer signaling, explicit signaling, implicit signaling, or combinations of these types of signaling.

In 3GPP LTE (Rel-8 and 9) and LTE-A (Rel-10), a number of transmission modes are specified for downlink shared channel (PDSCH) transmission, including transmit diversity, open-loop and closed-loop spatial multiplexing, dual-layer beamforming (BF) transmission, and others. The reference signals for the UE to demodulate the PDSCH could include a common reference signal (CRS or cell-specific reference signal) and/or a dedicated reference signal (DRS or UE-specific reference signal). A number of transmission modes specified in LTE and LTE-A use DRS for PDSCH demodulation, including transmission mode 7 in Rel-8, which supports single-layer beamforming transmission, transmission mode 8 in Rel-9, which supports dual-layer beamforming transmission, and new transmission modes to be specified in Rel-10.

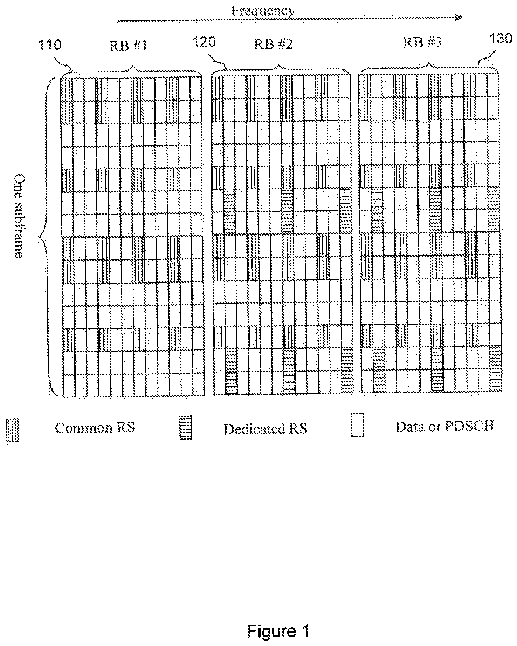

Figure 1 shows an example of CRS and DRS allocations for LTE Rel-8 and Rel-9, where vertically hatched sub-carriers are used to transmit CRSs and horizontally hatched sub-carriers are used to transmit DRSs. As can be observed in the figure, the CRSs are transmitted on all the resource blocks (RBs) (RB#1 110, RB#2 120, and RB#3 130 as shown in the figure as examples), while DRSs are transmitted only on certain RBs (RB#2 120 and RB#3 130 in the example) and are assigned to a particular UE.

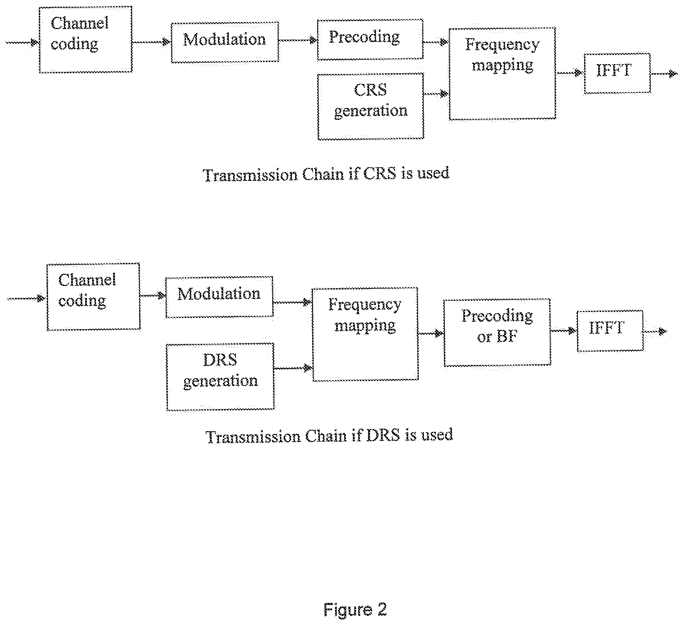

The benefit of using the CRS for data demodulation is that the CRS is transmitted on all RBs and in all the subframes. This allows the UE to conduct interpolation/extrapolation in channel estimation and thereby improve the performance of channel estimation, especially for a UE with low mobility and a relatively flat channel. Using Figure 1 as an example, channel estimation based on the CRS could be conducted using interpolation/extrapolation across a number of RBs, for example RB#1 110, RB#2 120, and RB#3 130. However, as shown in Figure 2, because the CRS is not precoded as the data (PDSCH), in order for the UE to estimate the equivalent channel experienced by the data, the access node informs the UE of the precoding vector or precoding matrices it uses for the UE. Providing this information to the UE could increase the downlink control signaling overhead. Moreover, when the conventional beamforming technique is used at the access node, the signaling to the UE of the beamforming weights used at the access node could be problematic and could impact the performance of UE decoding. For clarity in the following discussion, the term "precoding vector" may hereinafter refer to either a precoding vector or a beamforming weights. Also, the term "precoding vector" may imply a single layer, and there may be situations where the term "precoding matrix" may be more appropriate. Hereinafter, the term "precoding vector" may refer to either a precoding vector or a precoding matrix.

On the other hand, as shown in Figure 2, using DRS means that the reference signal is applied with the same precoding vector as the data (PDSCH) to a particular UE, and such a DRS is transmitted only in the RBs allocated to that UE. This leads to less overhead compared with the CRS and to the saving of some control signaling such as the precoding vector and the power allocation, as such information would already be conveyed by the DRS transmission. However, an issue that arises with the use of DRS concerns channel interpolation/extrapolation during channel estimation at the UE. The UE first needs to know on which RBs the same precoding vector is applied so that it can apply channel interpolation/extrapolation with the same precoding vector only within those RBs. In addition, as DRSs are not transmitted in the RBs that not assigned to a particular UE, channel interpolation/extrapolation cannot be conducted at or across the boundary of the RBs allocated to the UE, and therefore some performance degradations could result.

Taking the illustration in Figure 1 as an example, if only RB#2 120 and RB#3 130 are allocated to a particular UE for transmission using a DRS as the demodulation reference signal (DM-RS), then the DRS will be transmitted only in RB#2 120 and RB#3 130, as indicated in the figure. This could allow the UE to do channel interpolation/extrapolation across RB#2 120 and RB#3 130 to improve the channel estimation performance. That restriction could be further limited if the precoding vectors used for RB#2 120 and RB#3 130 are not the same or if the UE is not aware that the precoding vectors used for RB#2 120 and RB#3 130 are the same and therefore assumes they are different. In addition, even if only RB#2 120 and RB#3 130 are allocated to a particular UE, the UE could perform CRS-based channel interpolation/extrapolation using the CRS in RB#1 110, RB#2 120, and RB#3 130. This will benefit the channel estimation performance, especially on those sub-carriers at the boundary of a resource allocation, such as those sub-carriers in RB#1 110 neighboring RB#2 120. However, such a procedure could not be exploited if channel estimation is based on DRS, as it can be seen from Figure 1 that DRS is not transmitted in RB#1 110, which is not allocated to the UE.

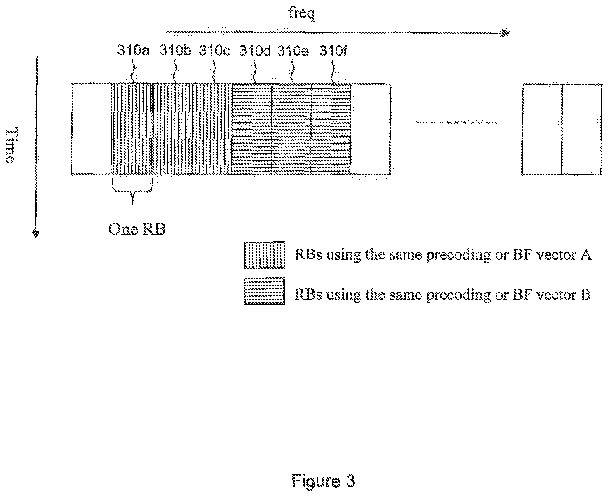

In summary, the use of DRS has some merits over using CRS, which include low reference signal overhead and saving on downlink control signaling of precoding and power allocation. However, for DRS, the UE needs to know on which RBs the same precoding is applied, as that would allow it to efficiently conduct channel interpolation/extrapolation across these RBs during the channel estimation. This is illustrated in Figure 3, which shows an allocation of six RBs 310 for a UE using DRS, three of them (310a, 310b, and 310c) using one precoding vector and the other three (310d, 310e, and 310f) using another precoding vector. If the UE knows that across three RBs 310, the same precoding vector is used, it could conduct channel interpolation/extrapolation across those three RBs 310 without the need of knowing the exact precoding vector.

On the other hand, if the UE does not know on which RBs the same precoding vector is used by the access node, it could only assume the precoding vector does not vary within one RB and therefore could only apply channel interpolation/extrapolation within the same RB. That could compromise the performance of channel estimation, especially for UEs with low or medium mobility and with a channel which is relatively flat or frequency less selective.

From the previous discussion, it might be seen that if a DRS is used as the DM-RS, there is no need for the access node to signal the precise precoding vector, but the UE may need to know the range of RBs over which the precoding vector does not vary. The number of contiguous RBs on which the same precoding vector is applied can be referred to as the precoding granularity value. This value may need to be provided to the UE so that the UE can conduct channel interpolation/extrapolation when a DRS is used. However, in the current design for transmission mode 7 (Rel-8) and transmission mode 8 (Rel-9), no mechanism is in place for providing the precoding granularity value to the UE. The UE might simply assume that the precoding vector does not vary within one RB and therefore might apply channel interpolation/extrapolation only within one RB. That could lead to deteriorated channel estimation performance as channel interpolation/extrapolation across a number of RBs would improve the channel estimation, especially when the channel is relatively flat. For LTE-A (Rel-10), a number of solutions have been proposed regarding the signaling of precoding granularity. Some proposals suggest that using a fixed precoding granularity value of two RBs may be sufficient. Other proposals suggest that a precoding granularity value greater than one may be applicable only for high-rank transmissions.

In various embodiments, a precoding granularity value is signaled to a UE in various ways when a DRS is used as the DM-RS. Embodiments of four solutions are provided, any of which could be used individually or in combination with any of the other solutions.

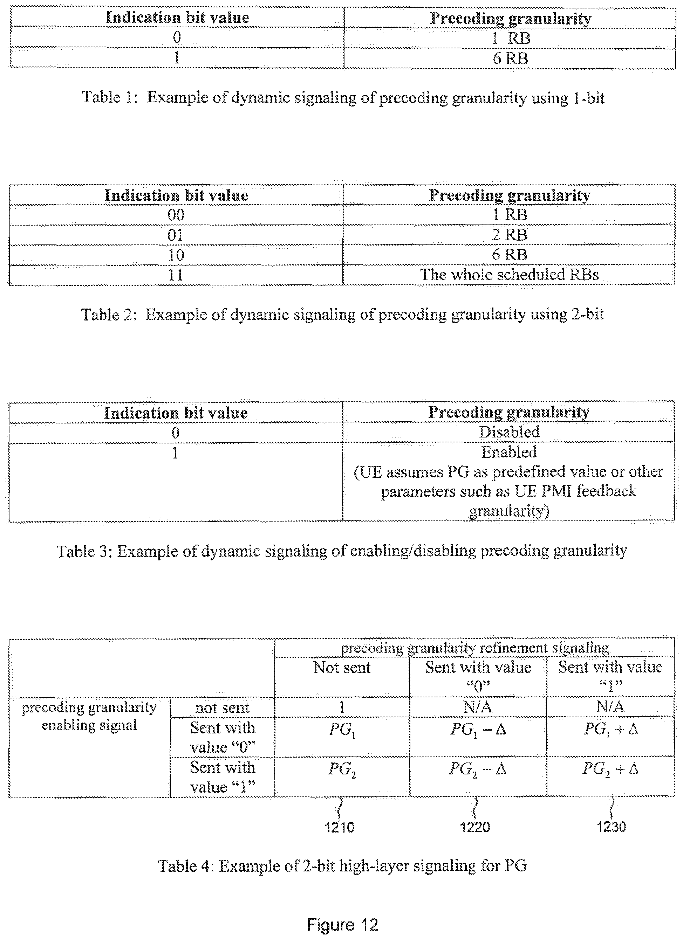

In a first solution, the value of the precoding granularity is signaled to the UE dynamically through the downlink control channel. To achieve this, one or two bits, for example, could be added in the downlink control information (DCI) to indicate different precoding granularity choices. Table 1 and Table 2 in Figure 12 show some examples of such signaling. In the example of Table 1, one bit is used for precoding granularity signaling. When the bit has a first value, a precoding granularity of one resource block is signaled to the UE, and when the bit has a second value, a precoding granularity of six resource blocks is signaled to the UE. In other embodiments, the values of the bit could indicate precoding granularities of other numbers of resource blocks. In Table 2, two bits are used for precoding granularity signaling, and thus four different values of the precoding granularity could be signaled. In this example, when the two bits have a first value, a precoding granularity of one resource block is signaled to the UE, when the two bits have a second value, a precoding granularity of two resource blocks is signaled to the UE, when the two bits have a third value, a precoding granularity of six resource blocks is signaled to the UE, and when the two bits have a fourth value, all scheduled resource blocks are assumed to use the same precoding vector. In other embodiments, the values of the two bits could indicate precoding granularities of other numbers of resource blocks.

In addition to the precoding granularity value, the starting point of the precoding unit might also be signaled to the UE. The signaling could be implicit, e.g., the starting point could be the starting RB of the resource allocation (counting from the lower end of the frequency). Alternatively, the signaling could be explicit, e.g., the starting point could be a specified RB whose index is signaled to the UE dynamically or semi-statically.

In a variation of this solution, when precoding granularity is not needed all the time, a one-bit signaling could be used in the DCI to enable or disable precoding granularity, as shown in Table 3 in Figure 12. If precoding granularity is disabled, the indication of precoding granularity may not be used and the UE could assume that the precoding granularity value is one RB. If precoding granularity is enabled, a default precoding granularity value could be assumed by the UE. This default value could be semi-statically configured by high-layer signaling or could take other parameters such as UE precoding matrix index (PMI) feedback granularity.

In a second solution, high-layer signaling is used to signal the precoding granularity value semi-statically. The high-layer signaling might be radio resource control (RRC) signaling, transmission of a medium access control (MAC) control element, or similar signaling. A benefit of using high-layer signaling semi-statically for precoding granularity is that it uses less signaling overhead than dynamic signaling in the DCI. However, a drawback of using high-layer signaling for such a purpose is its slow reaction to channel changes and slow pace in updating the precoding granularity value.

To signal precoding granularity using high-layer signaling, one or two bits could be used, as with the dynamic signaling case. For one-bit signaling, the signaling bit could be interpreted as shown in Table 1, for example. Alternatively, the signaling bit could be viewed as an enabling bit for precoding granularity as shown in Table 3, for example. In such a case, if such signaling is not sent by the access node, the UE could assume no precoding granularity and could assume the same precoding vector is applied within the same RB. If a single bit is sent to the UE, the UE can assume that the precoding granularity function is enabled, and can assume precoding granularity with a predetermined value, such as two or six RBs.

An alternative is that, after enabling, the precoding granularity value could be linked to other parameters such as uplink feedback granularity. For example, if precoding granularity is enabled while the precoding feedback granularity sub-band size is four RBs, then the downlink precoding granularity value assumed by the UE could also be four RBs.

If two-bit high-layer signaling is used for precoding granularity, the two bits could be used together as one high-layer signal, and the meanings of the bits could be interpreted similarly to the dynamic signaling case as shown in Table 2 as an example. Alternatively, the two bits could be used separately, one to enable precoding granularity with a default value and the other to indicate a refinement of the default value. For example, if the precoding granularity enabling bit is sent, the UE could assume that the default value of the precoding granularity is six RBs. If needed, the access node could also send the precoding granularity refinement signaling. If the refinement signaling takes a value of "0", for example, a two-RB precoding granularity might be indicated, while if takes a value of "1", for example, a four-RB precoding granularity might be indicated. Such a refinement signaling could also be used as a delta value related to the default value enabled by the first signaling. For example, if the default value of the precoding granularity triggered by the precoding granularity enabling signal is four RBs, then a refinement signal of "0" could change the precoding granularity to 4 - 2 = 2 RBs, while a refinement signal of "1" could change the precoding granularity to 4 + 2 = 6 RBs. The delta value could be predetermined depending on the system bandwidth, and the refinement signal might only indicate the direction of applying the delta value (plus or minus).

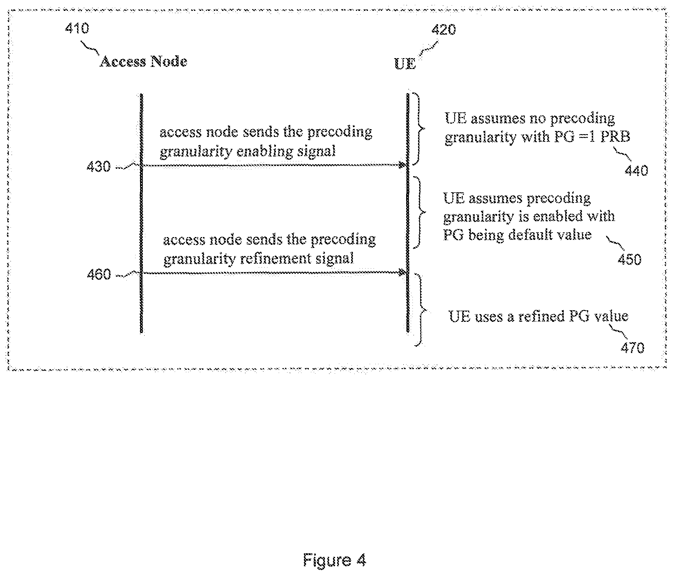

Figure 4 illustrates an embodiment of a procedure of such two-tier signaling between an access node 410 and a UE 420. At event 430, the access node 410 might send a precoding granularity enabling signal. At event 440, if the access node 410 does not send a precoding granularity enabling signal, the UE 420 assumes no precoding granularity or, equivalently, a precoding granularity value of one resource block. At event 450, if the access node 410 does send a precoding granularity enabling signal, the UE 420 assumes that precoding granularity is enabled and has a default value. At event 460, if the access node 410 has sent a precoding granularity enabling signal, the access node 410 might also send a precoding granularity refinement signal. In such a case, the UE 420, at event 470, might use the value received in the refinement signal to adjust the default value.

Alternatively, the one-bit high-layer signaling could convey three different kinds of messages to the UE. If the UE does not receive a precoding granularity enabling signal, it could assume no precoding granularity or could assume a precoding granularity value of one resource block. If the UE receives a precoding granularity enabling signal with a value of "0", it could assume that precoding granularity is enabled and that the precoding granularity takes value #1. If the UE receives a precoding granularity enabling signal with a value of "1", it could assume that precoding granularity is enabled and that the precoding granularity takes value #2.

This alternative is illustrated in column 1210 of Table 4 in Figure 12, where it can be seen that when the precoding granularity enabling signal is not sent, the UE assumes a precoding granularity of one resource block. When the precoding granularity enabling signal is sent with a value of "0", the UE assumes a precoding granularity of $PG_1$. When the precoding granularity enabling signal is sent with a value of "1", the UE assumes a precoding granularity of $PG_2$.

In a variation of this alternative, a precoding granularity refinement signal could be used in conjunction with the precoding granularity enabling signal as a relative value by which to adjust precoding granularity. An example of such usage is shown in columns 1220 and 1230 in Table 4, where $PG_1$ and $PG_2$ are precoding granularity values #1 and #2 in the unit of RBs, for example, and $\Delta$ is a relative value for precoding granularity refinement. In column 1220, when the precoding granularity enabling signal and the precoding refinement enabling signal are both sent with a value of "0", the UE assumes a precoding granularity of $PG_1 - \Delta$. When the precoding granularity enabling signal is sent with a value of "1", and the precoding refinement enabling signal is sent with a value of "0", the UE assumes a precoding granularity of $PG_2 - \Delta$ In column 1230, when the precoding granularity enabling signal is sent with a value of "0", and the precoding refinement enabling signal is sent with a value of "1", the UE assumes a precoding granularity of $PG_1 + \Delta$. When the precoding granularity enabling signal and the precoding refinement enabling signal are both sent with a value of "1", the UE assumes a precoding granularity of $PG_2 + \Delta$.

As mentioned above, for Rel-8 and Rel-9, no precoding granularity is specified for transmission modes 7 and 8, which both use the DM-RS. To improve their performance, precoding granularity could be introduced. However, as these two releases of the specification are close to completion, changes to them may not be welcome. It is believed that using high-layer signaling, as described above, would provide a feasible solution to this by introducing such features with limited impact to the specification.

In a third solution, dynamic signaling and high-layer signaling are used together for precoding granularity. For example, high-layer signaling could be used to convey a predefined precoding granularity value, which could be updated semi-statically, while dynamic signaling could be used to enable or disable precoding granularity. In other words, for example, dynamic signaling might be used to specify the current value of the bit or bits in the left hand columns of Tables 1 or 2. High-layer signaling might be used to periodically update the values in the right hand columns of Tables 1 or 2 to which the left hand values refer.

The three solutions described above use explicit signaling, with either dynamic signaling, high-layer signaling, or both. That is, signaling bits are provided over the air for the specific purpose of conveying precoding granularity information. In a fourth solution, implicit signaling is used to signal precoding granularity. That is, the precoding granularity is linked to one or more existing parameters that are transmitted for other purposes. Six different alternatives are provided under this fourth solution.

In a first alternative, the enabling of precoding granularity is implicitly linked to the feedback mode. Various feedback modes can be configured wherein information about the downlink channel might be measured at the UE and fed back to the access node. Wideband feedback might be used, sub-band feedback might be used, or feedback might be disabled. With wideband feedback, the entire bandwidth is measured, and one feedback value is provided to the access node. With sub-band feedback, different portions of the system bandwidth are measured, and values for each of the portions are fed back to the access node.

In an embodiment of this first alternative, if no feedback mode is configured (including no feedback as default) or if wideband feedback is configured, precoding granularity is not used. When precoding granularity is not used, the UE could assume that the precoding granularity value is one RB. If sub-band feedback is configured, precoding granularity is enabled and is linked to the feedback granularity or to a predefined value. That is, the precoding granularity value might be derived from the width of the sub-band and might be the same as the feedback sub-band granularity, or the precoding granularity value might be the same regardless of the sub-band width.

In a second alternative, the enabling of precoding granularity is implicitly linked to the transmission mode. One transmission mode is closed-loop precoding, wherein the UE feeds back to the access node information about the precoding vector that the UE prefers. Closed-loop precoding is typically used when the UE is fixed or moving slowly, since some time is needed for the downlink channel to be measured and the information fed back. The feedback information may no longer be relevant by the time the access node receives it unless the feedback information is changing slowly.

Another transmission mode is the open-loop precoding mode, wherein the UE does not feed information back or only feeds back limited information. If the UE is moving very quickly, then the transmission channel is likely to be changing quickly also. By the time the UE can provide any feedback about the precoding vector it prefers, the information might be out of date. Feedback of PMI is typically not provided in such a case.

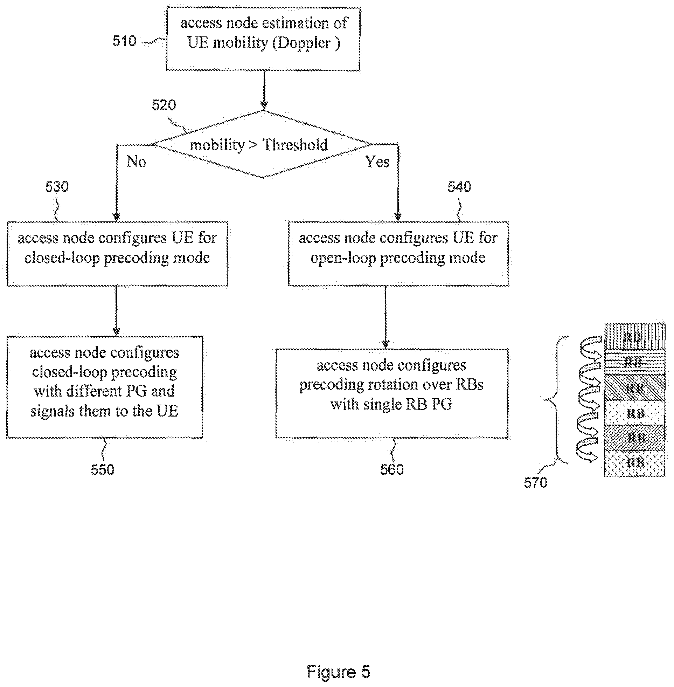

In an embodiment of this second alternative, for transmission mode 8, if DCI format 2B is used, precoding granularity could be enabled. On the other hand, if a cell radio network temporary identifier (C-RNTI) is used along with DCI format 1A, then precoding granularity does not have to be assumed, as transmit diversity will be used. For a UE with medium or high mobility, closed-loop precoding may not work well, as the precoding vector feedback from the UE could be aging. In this case, an open-loop precoding mode could be introduced, in which the precoding vector could be rotated over different RBs. If such a transmission mode is introduced, the precoding granularity could be linked to it, as shown in Figure 5. It can be seen from the figure that, if the open-loop precoding mode is used, a precoding granularity value of a single RB or a pre-defined, fixed number of RBs could be assumed by the UE, while if closed-loop precoding is configured, different precoding granularities could be used and signaled.

That is, in Figure 5, at block 510, the access node estimates the mobility of the UE, or how fast the UE is moving, or estimates some other metrics. At block 520, the access node determines whether the mobility exceeds a threshold. If the UE's mobility does not exceed the threshold, the access node, at block 530, configures the UE for the closed-loop precoding mode. If the UE's mobility does exceed the threshold, the access node, at block 540, configures the UE for the open-loop precoding mode.

In an embodiment, if the access node configures the UE for the closed-loop precoding mode, the access node then, at block 550, configures the UE for a plurality of different precoding granularity values and signals the precoding granularity values to the UE. If the access node configures the UE for the open-loop precoding mode, the access node then, at block 560, configures the UE with a fixed precoding granularity value, for example, of one resource block. That is, the precoding granularity value is implicitly linked to the transmission mode.

In an embodiment, if the access node, at block 560, configures the UE with a precoding granularity value of one resource block, a precoding rotation procedure as depicted at block 570 might be used. That is, a predefined set of different precoding vectors might exist, and the pattern of the precoding vectors within the set might be known to both the access node and the UE. Each precoding vector in the set might apply to a single resource block or to a fixed number of resource blocks. The access node and the UE might cycle through the set such that each is aware of which precoding vector is applied to which resource block.

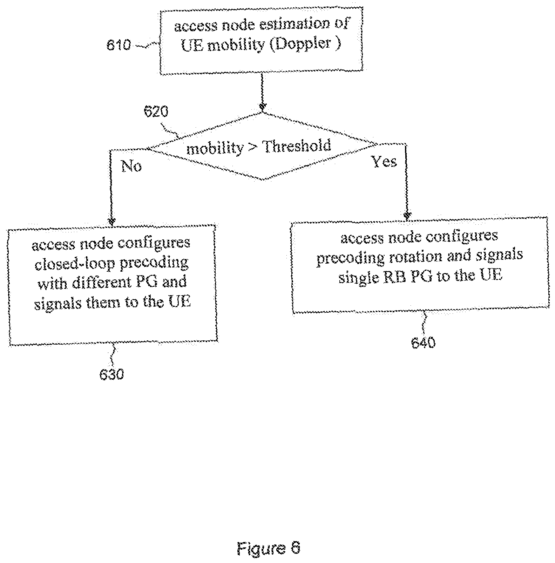

Introducing a large number of transmission modes as in Rel-8 may not be a desirable way to accommodate all the transmission scenarios. In an embodiment, precoding granularity signaling can implicitly indicate the transmission mode. This alternative is shown in Figure 6. At block 610, the access node obtains an estimation of the UE's mobility. At block 620, the access node determines whether the mobility exceeds a threshold. If the UE's mobility is below the threshold, closed-loop precoding is used at block 630, and the access node signals the corresponding precoding granularity to the UE, similarly to the procedure at block 550 in Figure 5. If the UE's mobility is above the threshold, then the access node, at block 640, configures its transmissions with rotating precoding across RBs and signals single-RB precoding granularity to the UE, similarly to the procedure at block 560 in Figure 5. This avoids the need for explicitly determining whether the open-loop precoding or the closed-loop precoding transmission mode will be used.

That is, in the method illustrated in Figure 5, the transmission mode is determined based on the UE's mobility, and the precoding granularity is then linked to the transmission mode. In the method illustrated in Figure 6, on the other hand, the precoding granularity is directly determined based on the UE's mobility, and the transmission mode may be inferred from the precoding granularity, if desired.

In a third alternative, the enabling of precoding granularity is implicitly linked to the transmission rank feedback. The transmission rank may be considered the number of spatial layers the UE can support on the downlink. This number might be fed back to the access node by the UE and/or might be determined at the access node. The access node and UE might both be aware that when the transmission rank is below a certain value, precoding granularity will not be enabled and when the transmission rank is above a certain value, precoding granularity will be enabled. The linkage between precoding granularity and transmission rank can be made because precoding granularity can provide more performance benefits for higher-rank transmission than for lower-rank transmission, partially due to relatively low DM-RS density per ports in higher-rank transmission, such as 8 x 8 transmission in Rel-10. As an example, if the transmission rank is greater than four, precoding granularity could be enabled. Both the access node and the UE could be aware that precoding granularity is enabled in such a case, and therefore no explicit signaling would be needed for such enabling. The precoding granularity value that is used could be a predetermined value known to both the UE and the access node, or this value (e.g., 1-bit) could be explicitly signaled to the UE.

In a fourth alternative, the current precoding granularity value is implicitly obtained from the current resource allocation size (as measured in the total number of resource blocks). For example, if it is assumed that $N_{PRB}$ is the total number of resource blocks in the UE's resource allocation, then the precoding granularity value, $N_{PG}$, could be the highest factor of $N_{PRB}$ that is less than or equal to some predefined maximum $N_{max}$. Possible values for $N_{max}$ could be three, five, or six, for instance. If there is no such factor, then $N_{PG}$ could be assumed to be equal to one or some other predefined value. As an example, if $N_{max} = 5$ and $N_{PRB} = 7$, the largest factor less than the maximum is 1, so a precoding granularity of one resource block is used. If $N_{max} = 5$ and $N_{PRB} = 8$, the largest factor less than the maximum is 4, so a precoding granularity of four resource blocks is used.

In a fifth alternative, the UE's C-RNTI value on the physical downlink control channel (PDCCH) is used to implicitly signal one of two different precoding granularity values to the UE. A UE identifies that a particular resource allocation transmission on the PDCCH is intended for that UE by looking at the cyclic redundancy check (CRC) of the DCI, If the CRC is scrambled with the UE's C-RNTI, then the UE knows that the resource allocation was intended for itself.

In an embodiment, the CRC might or might not be XOR-masked with $FF_{16}$ (i.e., all 1s in binary) to provide one of two different values to the UE. Each of the two values can then be implicitly linked to a different precoding granularity value. If a DCI is received on the PDCCH with that DCI's CRC scrambled with the UE's C-RNTI, then a first precoding granularity value is being signaled. If a DCI is received on the PDCCH with that DCI's CRC scrambled with the UE's C-RNTI and XOR-masked with $FF_{16}$, then a second precoding granularity value is being signaled.

In a sixth alternative, the access node implicitly signals one of two different precoding granularity values to the UE via a parameter of the resource allocation size. The resource allocation size can be defined in terms of a total number of resource blocks or resource block groups, depending upon the resource allocation type. In an embodiment, the precoding granularity value is based on the parity of the resource allocation size, where parity refers to whether the resource allocation size is an even number or an odd number. For example, if the total number of resource units is odd, then the UE assumes that the access node is signaling a first precoding granularity value. Conversely, if the total number of resource units is even, then the UE assumes that the access node is signaling a second precoding granularity value.

The preceding discussion has focused on the signaling of a precoding granularity value to the UE. The discussion now turns to the application of a signaled precoding granularity value in different types of resource allocation.

There are a number of types of resource allocation defined in LTE to satisfy different resource allocation needs. For example, in resource allocation type 0, a set of contiguous RBs, or resource block groups (RBGs), could be allocated together as a unit. A bit map is used to indicate which RBGs are allocated, and the RBGs could be allocated contiguously or non-contiguously. As RBG size (the number of physical resource blocks within each RBG) varies depending on the system bandwidth, it may not happen to match the precoding granularity value. For example, an RBG might have a size of three RBs, but the precoding granularity might have a value of two. In such a case, the same precoding granularity value may not necessarily be applied to all of the RBs in an RBG.

In an embodiment, when such a mismatch occurs between RBG size and precoding granularity value, one or more of four alternatives are used in applying precoding granularity to the RBs in an RBG. The first three alternatives are RB-based solutions, while the fourth alternative is an RBG-based solution.

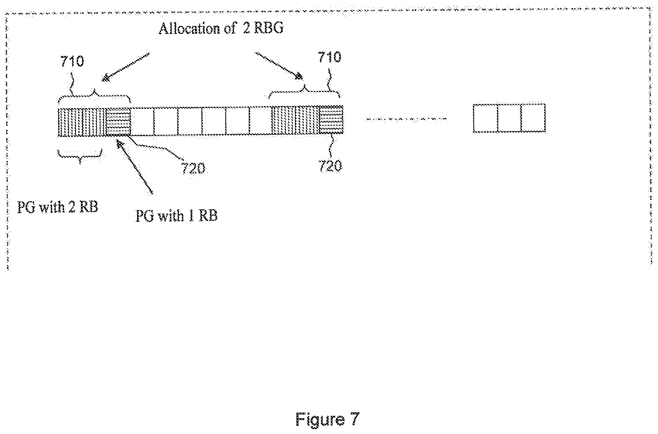

In the first alternative, precoding granularity is applied within each assigned RBG, and the UE assumes a precoding granularity value as explicitly or implicitly signaled by one of the above techniques. Any remaining RBs in each RBG whose number is smaller than the precoding granularity value assume their own precoding vector. The assigned RBGs could be located contiguously or non-contiguously to one another. An example is shown in Figure 7, where two non-contiguous RBGs 710 are allocated, and each RBG 710 consists of three RBs. If the precoding granularity value is specified as two RBs, then in each RBG, the first two RBs follow the precoding granularity specified and have the same precoding vector, while the remaining one RB 720 assumes its own precoding vector.

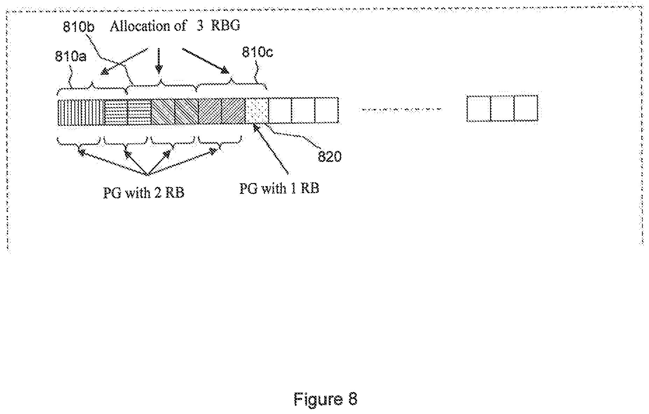

In the second alternative, contiguous RBG allocation is assumed, and the precoding granularity value is applied continuously through all of the RBs in each of the assigned RBGs. Only those remaining RBs at the end whose number is smaller than specified precoding granularity value assume their own precoding vector. An example is shown in Figure 8, where three contiguous RBGs 810 are allocated, and each RBG 810 consists of three RBs. If the precoding granularity value is specified as two RBs, then the UE assumes four pairs of contiguous RBs, with the same precoding vector in each pair. A pair of RBs with the same precoding vector can span two different RBGs, as can be seen in the case of the last RB in the first RBG 810a and the first RB in the second RBG 810b. The remaining one RB 820 at the end is assumed to have its own precoding vector.

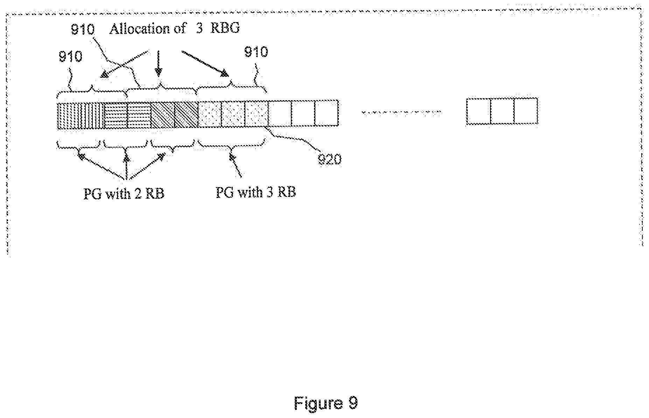

The third alternative may be considered a variation of the second alternative. In this case, the remaining RBs at the end have the same precoding as the immediately preceding RBs, which are eligible for precoding granularity. An example is shown in Figure 9, where three contiguous RBGs 910 are allocated, and each RBG 910 consists of three RBs. If the precoding granularity value is specified as two RBs, then the UE assumes three pairs of contiguous RBs, and within each pair the same precoding vector is assumed. The remaining one RB 920 at the end is included with the preceding two RBs and is assumed to have the same precoding vector that they have. That is, the UE can assume that the final three RBs use the same precoding vector.

The following is a general procedure to accommodate different resource allocations and different precoding granularity values under the second and third alternatives.

1. Assume a number of sets of RBs are allocated in resource allocation for a UE, where each set contains a number of contiguous RBs. The number of contiguous RBs in each set is specified as $N_{RB}^k$, where superscript $k$ denotes the set index. The precoding granularity (in terms of RB number) is specified as $N_{PG}$.

2. For each set $k$, if $N_{PG} >= N_{RB}^k$, the UE shall assume the same precoding vector is used for all RBs in the set.

3. For each set $k$, if $N_{PG} < N_{RB}^k$, the contiguous RBs could be grouped into two types of precoding units. Some units have a size of $N_{PG}$ and some may have a size smaller than $N_{PG}$ (e.g., one RB smaller). The more specific steps to construct such precoding units are provided as follows:

a. The number of distinct precoding units within set $k$ could be calculated $N_{PU}^k = \left\lceil \dfrac{N_{RB}^k}{N_{PG}} \right\rceil$.

b. Grouping contiguous RBs into precoding units, some units have the same size as $N_{PG}$ while some may have different size from $N_{PG}$. The relative ordering of the different-sized precoding units within an RB set can follow any predefined pattern that is known to both the access node and the UE. An example would be to arrange those units with the size of $N_{PG}$ first followed by some units with different size. Alternatively, precoding units with a size smaller than $N_{PG}$ could be arranged at the beginning of the set followed by precoding units with the size of $N_{PG}$.

c. The UE shall assume that the same precoding vector is used for all RBs within each precoding unit.

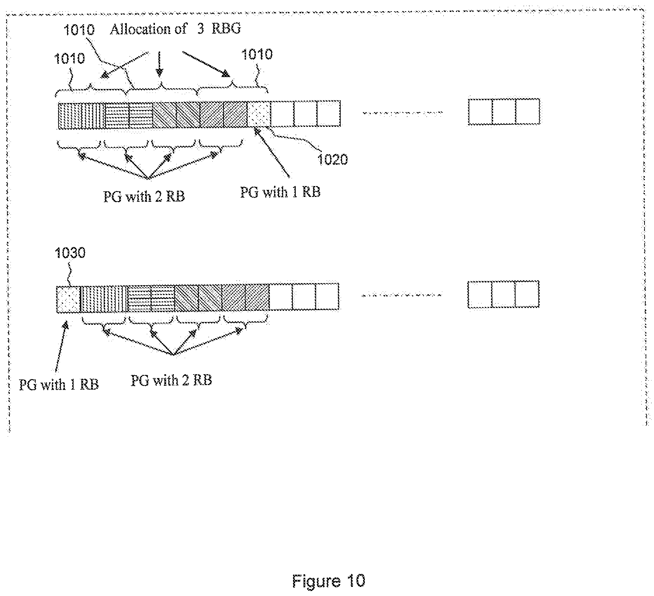

Figure 10 shows an example of different predefined mapping patterns for different precoding units. In the figure, three contiguous RBGs 1010 are assigned. The top plot shows that four precoding units with a size of two RBs each are generated first, with the remaining precoding unit 1020 having a size of one RB. The bottom plot shows that a precoding unit with one RB 1030 is generated at the beginning and is followed by four precoding units with a size of two RBs.

The following is a more specific embodiment of the above general procedure.

1. Assume that a number of sets of RBs are allocated in the resource allocation for a UE, and that the number of contiguous RBs in each set is $N_{RB}^k$, where superscript $k$ denotes the set index, while the precoding granularity is specified as $N_{PG}$.

2. For each set $k$, if $N_{RB}^k \leq N_{PG}$, the UE shall assume that the same precoding vector is used for all RBs in the set.

3. For each set $k$, if $N_{RB}^k > N_{PG}$, then:

a. The number of distinct precoded units within set $k$ is $N_{PU}^k = \left\lceil \dfrac{N_{RB}^k}{N_{PG}} \right\rceil$.

b. Precoding units within set $k$ are of size either

$$N_{PG,A}^k = \left\lfloor \frac{N_{RB}^k}{N_{PU}^k} \right\rfloor \quad \text{or} \quad N_{PG,B}^k = \left\lceil \frac{N_{RB}^k}{N_{PU}^k} \right\rceil,$$

where either $N_{PG,A}^k = N_{PG,B}^k$ or $N_{PG,A}^k = N_{PG,B}^k - 1$.

c. The first $N_B^k = N_{RB}^k \bmod N_{PG,A}^k$ precoding units are of size $N_{PG,B}^k$, and the remaining $N_A^k = N_{PB}^k - N_B^k$ precoding units are of size $N_{PG,A}^k$.

d. The UE shall assume that the same precoding vector is used for all RBs within each precoding unit.

In the above procedure, the relative ordering of the different-sized precoding units within an RB set can follow any predefined pattern that is known to both the access node and the UE. For example, step 3c states that the larger precoding units (of size $N_{PG,B}^k$) shall come first, as in the upper portion of Figure 10. However, the ordering could be reversed with the smaller precoding units (of size $N_{PG,A}^k$) coming first instead, as in the lower portion of Figure 10.

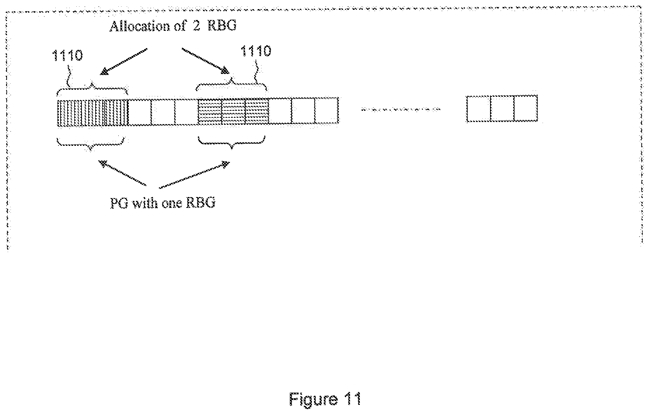

In the fourth alternative, instead of defining precoding granularity on a physical resource block basis, the precoding granularity is defined on an RBG basis. In such cases, a precoding granularity value of two, for example, simply means two RBGs instead of two RBs. Such a definition has some limitation, however, as it may be suitable only for resource allocation type 0, which is RBG-based, and may not work well for resource allocation types 1 and 2, which are RB-based. An example is shown in Figure 11, where two non-contiguous RBGs 1110 are allocated, and each RBG 1110 consists of three RBs. In such a situation, the precoding granularity specified could be based on RBGs instead of RBs, and therefore, three RBs in each RBG could assume the same precoding vector.

To facilitate this alternative, an implicit relation could be specified between RBG/RB-based precoding granularity and types of resource allocation. The resource allocation type is typically indicated by a 1-bit flag in the DCI. For example, if type 0 resource allocation is used, the precoding granularity is RBG-based. Otherwise, it is RB-based. To be more specific, if type 0 resource allocation is indicated in the DCI, the UE could assume that the precoding granularity is RBG-based. For example, if precoding granularity = 2 is signaled and a type 0 resource allocation is used, the UE assumes that the precoding granularity is two RBGs if two or more consecutive RBGs are allocated. If non-contiguous RBGs are allocated, the UE assumes that the precoding granularity is restricted to one RBG. Similar to the situation described above, when several consecutive RBGs are allocated, a first portion of the RBGs could form a number of precoding units based on precoding granularity assignment (precoding granularity value is in the unit of RBG in this case), and the remaining RBG whose number is smaller than the precoding granularity value would then assume its own precoding vector.

In a variation of this alternative, different methods for deriving the appropriate precoding granularity could be used based on the type of resource allocation indicated in a DCI. For example, if type 0 resource allocation was indicated in a DCI, the UE would use one of the methods described herein to determine the precoding granularity, while if type 1 resource allocation was indicated, a different method might be used by the UE to obtain the precoding granularity, and similarly for type 2 resource allocation. For example, for resource allocation type 2, if localized resource allocation is specified, the above-mentioned methods could be used to apply precoding granularity. However, for distributed resource allocation, it may be difficult to apply precoding granularity, and in this case a precoding granularity of one RB could be assumed.

In another alternative, the same set of precoding granularity could be applicable to different types of resource allocation, which will simplify the standardization effort and may reduce the signaling overhead.

The signaling described herein for precoding granularity covers a wide range of solutions, including dynamic signaling, semi-static signaling, explicit signaling, and implicit signaling. This could provide the UE with necessary information on precoding granularity and thereby allow the UE to conduct channel interpolation/extrapolation if needed to improve channel estimation.

The signaling described herein also supports different precoding granularity values, from one RB to several RBs. This allows the exploitation of the benefits of channel estimation in different channel conditions and UE mobility circumstances. For example, if the transmission channel is relatively flat, a larger precoding granularity could be used by the access node, and the UE could conduct channel interpolation/extrapolation across a number of RBs to improve channel estimation performance. On the other hand, if the channel is quite dispersive and the coherent bandwidth is small, the access node might use a smaller precoding granularity. For a UE with a relatively high mobility, closed-loop precoding may not work well. In such a situation, precoding rotation over RBs could be a practical solution, and the UE could assume the precoding vector varies over different RBs.

Such signaling could also be sent to the UE as a recommendation and may not force the UE into certain behaviors. For example, low-end UEs that may not support channel internal interpolation across RBs could simply ignore such signaling and only conduct channel estimation on a per RB basis.

The disclosed methods of signaling of precoding granularity could be used individually or together. For example, a combination of explicit and implicit signaling could be used together to achieve the best overall performance with the least overhead or least impact to the specifications.

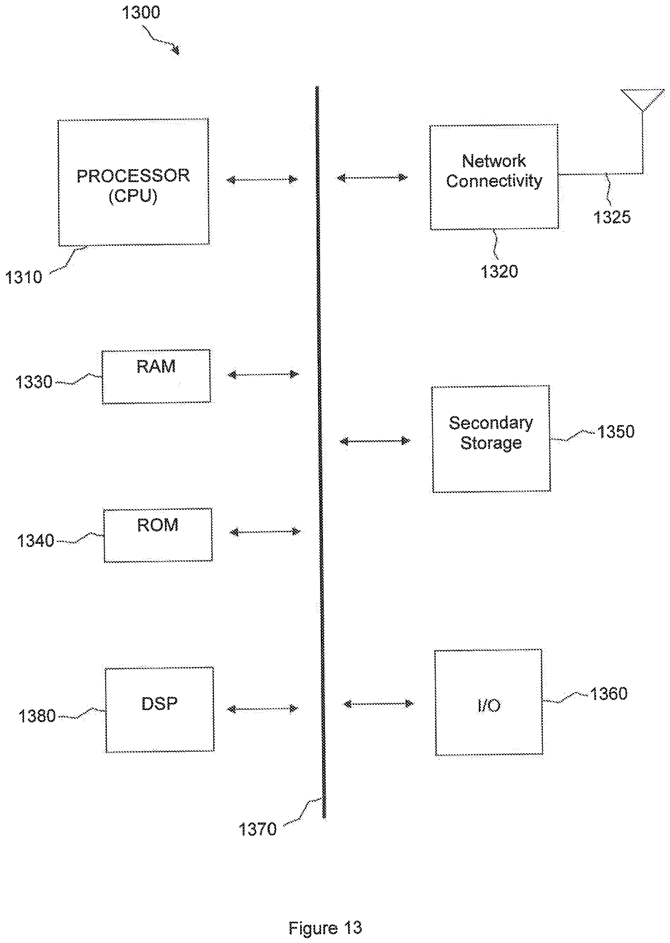

The access node, UE, and other components described above might include a processing component that is capable of executing instructions related to the actions described above. Figure 13 illustrates an example of a system 1300 that includes a processing component 1310 suitable for implementing one or more embodiments disclosed herein. In addition to the processor 1310 (which may be referred to as a central processor unit or CPU), the system 1300 might include network connectivity devices 1320, random access memory (RAM) 1330, read only memory (ROM) 1340, secondary storage 1350, and input/output (I/O) devices 1360. These components might communicate with one another via a bus 1370. In some cases, some of these components may not be present or may be combined in various combinations with one another or with other components not shown. These components might be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380 is shown as a separate component, the DSP 1380 might be incorporated into the processor 1310.

The processor 1310 executes instructions, codes, computer programs, or scripts that it might access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information. The network connectivity devices 1320 might also include one or more transceiver components 1325 capable of transmitting and/or receiving data wirelessly.

The RAM 1330 might be used to store volatile data and perhaps to store instructions that are executed by the processor 1310. The ROM 1340 is a non-volatile memory device that typically has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1325 might be considered to be a component of the I/O devices 1360 instead of or in addition to being a component of the network connectivity devices 1320.

In an embodiment, a method for indicating a precoding granularity value is provided. The method includes an access node performing at least one of dynamically signaling the precoding granularity value in a DCI, semi-statically signaling the precoding granularity value through high-layer signaling, and implicitly signaling the precoding granularity value through a link with at least one parameter that the access node transmits for another purpose.

In another embodiment, an access node in a wireless telecommunications system is provided. The access node includes a processor configured such that the access node performs at least one of dynamically signaling a precoding granularity value in a DCI, semi-statically signaling the precoding granularity value through high-layer signaling, and implicitly signaling the precoding granularity value through a link with at least one parameter that the access node transmits for another purpose.

In another embodiment, a UE is provided. The UE includes a processor configured such that the UE receives at least one of dynamic signaling of a precoding granularity value in a DCI, semi-static signaling of the precoding granularity value through high-layer signaling, and implicit signaling of the precoding granularity value through a link with at least one parameter that was transmitted for another purpose.

Under any of these embodiments, the following additional considerations might apply. When the precoding granularity value is dynamically signaled in the DCI, a first value of at least one bit in the DCI might indicate that precoding granularity is disabled, and a second value of the at least one bit in the DCI might indicate that precoding granularity is enabled with a default value. The default value might be at least one of semi-statically configured by high-layer signaling and implicitly linked to another parameter. When the precoding granularity value is signaled, the access node might further transmit a starting point of a precoding unit. A first value of at least one bit in the high-layer signaling might indicate a first precoding granularity value, and a second value of the at least one bit in the high-layer signaling might indicate a second precoding granularity value. A first value of at least one bit in the high-layer signaling might indicate that precoding granularity is disabled, and a second value of the at least one bit in the high-layer signaling might indicate that precoding granularity is enabled with a default value. The default value might be at least one of semi-statically configured by high-layer signaling and implicitly linked to another parameter. The high-layer signaling might comprise two bits, one of the bits indicating that precoding granularity is enabled with a default value, and another of the bits indicating a change in the default value. When the high-layer signaling is not transmitted, a precoding granularity value of one resource block might be indicated, when a first bit in the high-layer signaling has a first value, a first precoding granularity value greater than one resource block might be indicated, and when the first bit in the high-layer signaling has a second value, a second precoding granularity value greater than one resource block might be indicated. A second bit in the high-layer signaling might indicate a change in at least one of the first precoding granularity value and the second precoding granularity value. The high-layer signaling might indicate the precoding granularity value and the dynamic signaling might indicate whether the precoding granularity value is used. When implicit signaling is used, the at least one parameter that the access node transmits for another purpose might be at least one of a feedback mode, a transmission mode, a transmission rank, a resource allocation size, a scrambling status of a cyclic redundancy check (CRC), and a parity of the resource allocation size. When the parameter is the feedback mode and when no feedback mode is configured, precoding granularity might not be used, when wideband feedback is configured, precoding granularity might not be used, and when sub-band feedback is configured, precoding granularity might be enabled and might be linked to at least one of feedback granularity and a predefined value. When the access node signals the precoding granularity value of one resource block, each of a plurality of different precoding vectors might be applied in succession to each of a plurality of resource blocks. When the parameter is the resource allocation size, the precoding granularity value might be the highest factor of the total number of allocated resource blocks that is less than or equal to a predefined maximum. When the parameter is the scrambling status of the CRC and when the CRC is scrambled with a cell radio network temporary identifier (C-RNTI), a first precoding granularity value might be indicated, and when the CRC is scrambled with a C-RNTI that has been XOR-masked with a hexadecimal FF, a second precoding granularity value might be indicated. When the parameter is the parity of the resource allocation size and when the resource allocation size is an odd number, a first precoding granularity value might be indicated, and when the resource allocation size is an even number, a second precoding granularity value might be indicated.

While several embodiments have been provided in the present disclosure, it should be understood that the disclosed systems and methods may be embodied in many other specific forms without departing from the scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope disclosed herein.

## Claims

1. A method for user equipment, UE, comprising:

   receiving signaling, from a network, that configures a transmission mode of operation at the UE (420);
   receiving signaling, from the network, that configures a feedback mode of operation at the UE (420); and
   assuming at least one precoding granularity value based on the transmission mode and the feedback mode.

2. The method of claim 1, wherein the transmission mode configured at the UE (420) is closed-loop precoding.

3. The method of claim 1, wherein the at least one precoding granularity value indicates a precoding granularity of more than one resource block.

4. The method of claim 1, wherein the transmission mode configured at the UE (420) is open-loop precoding.

5. The method of claim 1, further comprising receiving a precoding granularity value indicating a precoding granularity of one resource block.

6. The method of claim 1, further comprising receiving a plurality of precoding granularity values.

7. The method of claim 1, wherein, when the UE (420) receives a precoding granularity value that is different from the number of resource blocks within a resource block group that contains at least one resource block to which the precoding granularity value applies, the precoding granularity value is applied to as many resource blocks in the resource block group as possible, and any remaining resource block in the resource group assumes a precoding vector that is different from any precoding vector that was applied to any other resource block in the resource block group.

8. The method of claim 1, wherein, when the UE (420) receives a precoding granularity value that is different from the number of resource blocks within a resource block group that contains at least one resource block to which the precoding granularity value applies, the precoding granularity value is applied to as many resource blocks in the resource block group as possible, and any remaining resource block in the resource group assumes a precoding vector that is the same as the precoding vector of an adjacent resource block.

9. The method of claim 1, further comprising applying the at least one precoding granularity value on a resource block group basis.

10. The method of claim 1, wherein precoding granularity is applied on a resource block group basis when a type 0 resource allocation is used, and precoding granularity is applied on a resource block basis when a resource allocation other than type 0 is used.

11. A user equipment, UE, device configured to perform the steps of any of claims 1 to 10.

## Patentansprüche

1. Ein Verfahren für eine Benutzereinrichtung (UE - user equipment), das aufweist:

Empfangen einer Signalisierung von einem Netzwerk, die einen Übertragungsbetriebsmodus an der UE (420) konfiguriert;
Empfangen einer Signalisierung von dem Netzwerk, die einen Rückkopplungsbetriebsmodus an der UE (420) konfiguriert; und
Annehmen zumindest eines Vorcodiergranularitätswerts basierend auf zumindest einem des Übertragungsmodus und des Rückkopplungsmodus.

2. Das Verfahren gemäß Anspruch 1, wobei der an der UE (420) konfigurierte Übertragungsmodus eine "geschlossene Schleife"-Vorcodierung ist.

3. Das Verfahren gemäß Anspruch 1, wobei der zumindest eine Vorcodiergranularitätswert eine Vorcodiergranularität von mehr als einem Ressourcenblock angibt.

4. Das Verfahren gemäß Anspruch 1, wobei der an der UE (420) konfigurierte Übertragungsmodus eine "offene Schleife"-Vorcodierung ist.

5. Das Verfahren gemäß Anspruch 1, das weiter ein Empfangen eines Vorcodiergranularitätswerts aufweist, der eine Vorcodiergranularität eines Ressourcenblocks angibt.

6. Das Verfahren gemäß Anspruch 1, das weiter ein Empfangen einer Vielzahl von Vorcodiergranularitätswerten aufweist.

7. Das Verfahren gemäß Anspruch 1, wobei, wenn die UE (420) einen Vorcodiergranularitätswert empfängt, der von der Anzahl von Ressourcenblöcken in einer Ressourcenblockgruppe, die zumindest einen Ressourcenblock enthält, für den der Vorcodiergranularitätswert gilt, verschieden ist, der Vorcodiergranularitätswert auf so viele Ressourcenblöcke in der Ressourcenblockgruppe wie möglich angewendet wird, und jeder verbleibende Ressourcenblock in der Ressourcengruppe einen Vorcodiervektor annimmt, der von einem Vorcodiervektor verschieden ist, der auf einen anderen Ressourcenblock in der Ressourcenblockgruppe angewendet wurde.

8. Das Verfahren gemäß Anspruch 1, wobei, wenn die UE (420) einen Vorcodiergranularitätswert empfängt, der von der Anzahl von Ressourcenblöcken in einer Ressourcenblockgruppe, die zumindest einen Ressourcenblock enthält, für den der Vorcodiergranularitätswert gilt, verschieden ist, der Vorcodiergranularitätswert auf so viele Ressourcenblöcke in der Ressourcenblockgruppe wie möglich angewendet wird, und jeder verbleibende Ressourcenblock in der Ressourcengruppe einen Vorcodiervektor annimmt, der derselbe ist wie der Vorcodiervektor eines angrenzenden Ressourcenblocks.

9. Das Verfahren gemäß Anspruch 1, das weiter ein Anwenden des zumindest einen Vorcodiergranularitätswerts auf einer Ressourcenblockgruppenbasis aufweist.

10. Das Verfahren gemäß Anspruch 1, wobei eine Vorcodiergranularität auf einer Ressourcenblockgruppenbasis angewendet wird, wenn eine Typ-0-Ressourcenzuteilung verwendet wird, und eine Vorcodiergranularität auf einer Ressourcenblockbasis angewendet wird, wenn eine von dem Typ-0 verschiedene Ressourcenzuteilung verwendet wird.

11. Eine Benutzereinrichtung(UE - user equipment)-Vorrichtung, die konfiguriert ist zum Durchführen der Schritte gemäß einem der Ansprüche 1 bis 10.

**Revendications**

1. Procédé pour un équipement utilisateur, UE, comprenant le fait :

de recevoir une signalisation, à partir d'un réseau, qui configure un mode de transmission de fonctionnement au niveau de l'UE (420) ;
de recevoir une signalisation, à partir du réseau, qui configure un mode de rétroaction de fonctionnement au niveau de l'UE (420) ; et
d'adopter au moins une valeur de granularité de précodage sur la base du mode de transmission et du mode de rétroaction.

2. Procédé de la revendication 1, dans lequel le mode de transmission configuré au niveau de l'UE (420) est un précodage en boucle fermée.

3. Procédé de la revendication 1, dans lequel l'au moins une valeur de granularité de précodage indique une granularité de précodage de plus d'un bloc de ressources.

4. Procédé de la revendication 1, dans lequel le mode de transmission configuré au niveau de l'UE (420) est un précodage en boucle ouverte.

5. Procédé de la revendication 1, comprenant en outre le fait de recevoir une valeur de granularité de précodage indiquant une granularité de précodage d'un bloc de ressources.

6. Procédé de la revendication 1, comprenant en outre le fait de recevoir une pluralité de valeurs de granularité de précodage.

**7.** Procédé de la revendication 1, dans lequel, lorsque l'UE (420) reçoit une valeur de granularité de précodage qui est différente du nombre de blocs de ressources dans un groupe de blocs de ressources qui contient au moins un bloc de ressources auquel s'applique la valeur de granularité de précodage, la valeur de granularité de précodage est appliquée à autant de blocs de ressources dans le groupe de blocs de ressources que possible, et tout bloc de ressources restant dans le groupe de ressources adopte un vecteur de précodage qui est différent de tout vecteur de précodage qui a été appliqué à tout autre bloc de ressources dans le groupe de blocs de ressources.

**8.** Procédé de la revendication 1, dans lequel, lorsque l'UE (420) reçoit une valeur de granularité de précodage qui est différente du nombre de blocs de ressources dans un groupe de blocs de ressources qui contient au moins un bloc de ressources auquel s'applique la valeur de granularité de précodage, la valeur de granularité de précodage est appliquée à autant de blocs de ressources dans le groupe de blocs de ressources que possible, et tout bloc de ressources restant dans le groupe de ressources adopte un vecteur de précodage qui est le même que le vecteur de précodage d'un bloc de ressources adjacent.

**9.** Procédé de la revendication 1, comprenant en outre le fait d'appliquer l'au moins une valeur de granularité de précodage sur une base de groupe de blocs de ressources.

**10.** Procédé de la revendication 1, dans lequel la granularité de précodage est appliquée sur une base de groupe de blocs de ressources lorsqu'une attribution de ressources de type 0 est utilisée, et une granularité de précodage est appliquée sur une base de blocs de ressources lorsqu'une attribution de ressources différente du type 0 est utilisée.

**11.** Dispositif d'équipement utilisateur, UE, configuré pour effectuer les étapes de l'une des revendications 1 à 10.

Figure 1

Channel coding → Modulation → Precoding → Frequency mapping → IFFT

CRS generation → Frequency mapping

Transmission Chain if CRS is used

Channel coding → Modulation → Frequency mapping → Precoding or BF → IFFT

DRS generation → Frequency mapping

Transmission Chain if DRS is used

Figure 2

freq

310a 310b 310c 310d 310e 310f

Time

One RB

RBs using the same precoding or BF vector A

RBs using the same precoding or BF vector B

Figure 3

Figure 4

510 —— access node estimation of
UE mobility (Doppler )

520
mobility > Threshold
No                    Yes

530
access node configures UE for
closed-loop precoding mode

540
access node configures UE for
open-loop precoding mode

access node configures
closed-loop precoding
with different PG and
signals them to the UE

access node configures
precoding rotation over RBs
with single RB PG

550                    560                    570

Figure 5

610 ~ access node estimation of
UE mobility (Doppler)

620
mobility > Threshold

No

Yes

access node configures
closed-loop precoding
with different PG and
signals them to the UE

630

access node configures
precoding rotation and signals
single RB PG to the UE

640

Figure 6

Figure 7

Figure 8

Figure 9

1010   Allocation of  3  RBG

1010                              1010

PG with 2 RB          PG with 1 RB

1020

1030

PG with 1 RB     PG with 2 RB

Figure 10

Figure 11

| Indication bit value | Precoding granularity |
|---|---|
| 0 | 1 RB |
| 1 | 6 RB |

Table 1: Example of dynamic signaling of precoding granularity using 1-bit

| Indication bit value | Precoding granularity |
|---|---|
| 00 | 1 RB |
| 01 | 2 RB |
| 10 | 6 RB |
| 11 | The whole scheduled RBs |

Table 2: Example of dynamic signaling of precoding granularity using 2-bit

| Indication bit value | Precoding granularity |
|---|---|
| 0 | Disabled |
| 1 | Enabled (UE assumes PG as predefined value or other parameters such as UE PMI feedback granularity) |

Table 3: Example of dynamic signaling of enabling/disabling precoding granularity

| | | precoding granularity refinement signaling | | |
|---|---|---|---|---|
| | | Not sent | Sent with value "0" | Sent with value "1" |
| precoding granularity enabling signal | not sent | 1 | N/A | N/A |
| | Sent with value "0" | $PG_1$ | $PG_1 - \Delta$ | $PG_1 + \Delta$ |
| | Sent with value "1" | $PG_2$ | $PG_2 - \Delta$ | $PG_2 + \Delta$ |

1210　　　　1220　　　　1230

Table 4: Example of 2-bit high-layer signaling for PG

Figure 12

Figure 13